# EUROPÄISCHE PATENTSCHRIFT

(11) **EP 0 440 318 B1**
(45) Veröffentlichungstag und Bekanntmachung des Hinweises auf die Patenterteilung: **19.07.1995**
(21) Anmeldenummer: 91250014.7
(22) Anmeldetag: 24.01.1991
(51) Int. Cl.: B25J 9/02, B25J 9/00

(54) **Handhabungsvorrichtung und Verfahren zum Handhaben von Werkstücken**
Manipulator and process for manipulating workpieces
Manipulateur et procédé de manipulation de pièces

(30) Priorität: 25.01.1990 DE 4002075
(43) Veröffentlichungstag der Anmeldung: 07.08.1991
(73) Patentinhaber: MANNESMANN Aktiengesellschaft, 40027 Düsseldorf (DE)
(72) Erfinder: Goedecke, Wolf-Dieter, Prof. Dr.-Ing., W-7731 Unterkirch (DE); Huber, Ralf, W-7734 Brichachtal (DE); Moosmann, Bernhard, W-7232 Hardt (DE)
(74) Vertreter: Presting, Hans-Joachim, Dipl.-Ing.

(56) Entgegenhaltungen:
- EP-A- 0 073 185
- EP-A- 0 076 231
- EP-A- 0 232 999
- CH-A- 653 943
- DE-A- 3 339 227
- DE-U- 8 807 313
- FR-A- 1 248 232
- FR-A- 2 548 069
- US-A- 4 336 926
- US-A- 4 694 733

## Beschreibung

Die Erfindung betrifft eine Handhabungsvorrichtung mit einer ersten, aus zwei parallelen Einzelachsen bestehenden Linearachse, die einen Doppelschlitten aufweist, der auf Profilen beider Einzelachsen läuft, wobei der Doppelschlitten mit einem Antriebsmittel der einen Einzelachse gekoppelt ist und auf dem Profil der anderen Einzelachse unangetrieben läuft. Eine solche Vorrichtung ist z.B. aus AT-A-0 384 386 bekannt.

Die Erfindung betrifft ferner ein Verfahren zum Handhaben von Werkstücken.

Eine Handhabungsvorrichtung der vorstehend genannten Art ist bekannt.

In der Handhabungstechnik werden Montageroboter eingesetzt, bei denen eine oder mehrere "Achsen" verwendet werden, um mit Greifern, Werkzeugen oder dgl. Bewegungen entlang mehrerer Koordinatenachsen oder um diese herum ausführen zu können. Unter "Achsen" versteht man dabei entweder Linearachsen oder Drehachsen, d.h. fremdkraftbetätigte Vorrichtungen, die eine Bewegung entlang einer Geraden oder um eine Achse herum erlauben.

Bei Linearachsen bedient man sich dabei üblicherweise Kolben-Zylinder-Einheiten, wobei sich in der modernen Handhabungstechnik kolbenstangenlose Kolben-Zylinder-Einheiten durchgesetzt haben. Hierunter versteht man Einheiten, bei denen in einem Zylinderrohr ein üblicherweise pneumatisch und beidseitig betätigter Kolben läuft. Der Kolben ist an beiden Stirnseiten mit einem Band, einer Schnur oder dgl. verbunden, die entlang der Zylinderachse verläuft, über Dichtungen aus dem Zylinder herausgeführt ist, über Umlenkrollen umgelenkt wird und an der Außenseite der Einheit mit einem Schlitten verbunden ist. Der Schlitten läuft an der Außenseite des Zylinders und bewegt sich damit gegenläufig zum Kolben.

Allein mit derartigen kolbenstangenlosen Linearachsen kann man daher Montageroboter oder allgemeine Handhabungsvorrichtungen unterschiedlichster Art aufbauen, indem man die Lineareinheiten an ihren Zylinderköpfen oder Schlitten miteinander verbindet, wobei die Achsen unter 90° zueinander angeordnet sein können, damit Montage- oder Handhabungsvorgänge entlang einer Mehrzahl von kartesischen Koordinaten ausgeführt werden können. Selbstverständlich ist dabei auch eine Kombination mit Drehachsen möglich, so daß zusätzlich Polarkoordinaten in die Steuerung der Vorrichtung mit einbezogen werden können.

Es versteht sich, daß als Linearachsen außer kolbenstangenlosen Kolben-Zylinder-Einheiten auch Kolben-Zylinder-Einheiten mit Kolbenstange oder Profil-Schlitten-Einheiten mit Zahnriemen- oder Spindelantrieb verwendet werden können.

Kombiniert man eine erste Linearachse mit einer zweiten Linearachse derart, daß beide Achsen einen Winkel von 90° zueinander einschließen und wird die erste Linearachse beispielsweise nach Art eines Portals mit ihren Zylinderköpfen raumfest angeordnet, so wirkt die zweite, dazu rechtwinklig verlaufende Linearachse als Ausleger. Dies gilt vor allem dann, wenn die zweite Achse mit ihrem Schlitten auf der ersten Achse befestigt ist und horizontal ausgerichtet wird.

Wenn in diesem Falle die zweite, als Ausleger wirkende Achse an ihrem freien Ende (Zylinderkopf) mit einem schweren Werkstück belastet ist, so ergeben sich beträchtliche Biegemomente, die über den langen Hebelarm der ausgefahrenen zweiten Achse und die Verbindung der beiden Schlitten miteinander auf das Längsprofil der ersten Achse übertragen werden. Derartige Biegemomente belasten die Führungen des Schlittens der ersten Achse auf deren Zylinder und können zu Beschädigungen führen.

Es ist daher von der eingangs erläuterten Handhabungsvorrichtung bekannt, die zweite, als Ausleger wirkende Linearachse nicht nur auf einer einzigen ersten Linearachse laufen zu lassen, sondern diese vielmehr in zwei Einzelachsen zu unterteilen, die parallel und im Abstand zueinander angeordnet sind. Auf diesen beiden Einzelachsen läuft dann ein Doppelschlitten, der den Schlitten der zweiten, als Ausleger wirkenden Linearachse trägt. Auf diese Weise kann das auf die Führungen der beiden Einzelachsen der ersten Linearachse wirkende Drehmoment auch bei hohen Belastungen der zweiten Achse drastisch vermindert werden. Zur Bewegung des Doppelschlittens auf den Einzelachsen der ersten Linearachse ist es lediglich erforderlich, den Doppelschlitten auf der einen der beiden Einzelachsen anzutreiben, während der Doppelschlitten auf der zweiten Einzelachse lediglich mechanisch geführt wird und dort unangetrieben läuft.

In der modernen Handhabungstechnik wird angestrebt, möglichst komplexe Handhabungs- oder Montagevorgänge mit einer Mindestzahl von Achsen ausführen zu können. Ein typisches Beispiel hierfür sind Bestückungsautomaten für elektronische Leiterplatten. Derartige Leiterplatten sind bekanntlich mit Bauelementen höchst unterschiedlicher Größe und Form bestückt. Um dies zu bewerkstelligen, ist für jede Art von Bauelementen ein besonderer Greifer erforderlich, der auf die spezielle Formgebung (rund, quadratisch, rechteckig, zylindrisch oder dgl.) abgestimmt ist. Man muß daher zum vollständigen Bestücken derartiger Leiterplatten eine Vielzahl von Achsen einsetzen, wobei jede Achse mit einem Montagegreifer versehen werden kann, der für eine bestimmte Art von Bauelementen geeignet ist. Jeder dieser Montagegreifer muß jedoch über der Fläche der Leiterplatten entlang von zwei kartesischen Koordinaten verfahrbar sein, um mit dem betreffenden Bauelement jede Oberflächenposition der Leiterplatte anfahren zu können.

Hierbei ergibt sich jedoch ein für herkömmliche Handhabungsvorrichtungen nicht-lösbarer Zielkonflikt, weil einerseits eine Vielzahl komplexer Bewegungsvorgänge mit notwendigerweise einer Vielzahl von Achsen andererseits auf einem minimalen Raum ausgeführt werden sollen.

Der Erfindung liegt daher die Aufgabe zugrunde, eine Handhabungsvorrichtung der eingangs genannten Art dahingehend weiterzubilden, daß auf kleinstmöglichem Raum eine größtmögliche Zahl von Bewegungsvorgängen entlang mehrerer Koordinatenrichtungen möglich ist.

Diese Aufgabe wird durch die Merkmalskombination des Patentanspruchs 1 gelöst.

Im Rahmen der vorliegenden Erfindung ist namlich zunächst erkannt worden, daß ein an sich für das Handhaben schwerer Werkstücke entwickeltes Linearachsenkonzept mit einer aus zwei Einzelachsen bestehenden ersten Linearachse in vorteilhafter Weise dazu verwendet werden kann, um bei geeigneter konstruktiver Weiterbildung eine Realisierung einer Vielzahl von Linearachsen auf kleinstmöglichem Raum zu ermöglichen. Hierzu wird in der bereits genannten Art eine weitere zweite Linearachse mit Doppelschlitten hinzugefügt, deren Antrieb/Führung gerade spiegelbildlich zum Antrieb/Führung der bekannten zweiten Linearachse ausgebildet ist.

Auf diese Weise ist es überraschend möglich, die beiden zweiten Linearachsen vollkommen unabhängig voneinander zu steuern, wobei die erhöhte mechanische Stabilität und damit auch eine erhöhte Präzision der Führung, in vollem Umfange erhalten bleibt. Da sich die Bewegungsbereiche der beiden zweiten Linearachsen nahezu vollkommen überlappen, wenn man von kleinen Randbereichen absieht, die durch die Breite der zweiten Achsen bestimmt sind, sind komplexe Montage-, Handhabungs-, Füge- oder Bestückungsvorgänge möglich, und zwar auch in einer Weise, bei der sich die Funktionen beider zweiten Linearachsen auf ein- und dasselbe Werkstück beziehen.

Bei einer bevorzugten Ausbildung der erfindungsgemäßen Handhabungsvorrichtung werden die Einzelachsen in an sich bekannter Weise von kolbenstangenlosen Kolben-Zylinder-Einheiten gebildet, bei denen die Schlitten mit den Kolben über Bänder verbunden sind, wobei das eine Band der einen Einzelachse mit dem ersten Doppelschlitten verbunden ist und lose durch einen Durchgang im zweiten Doppelschlitten läuft, während das andere Band der anderen Einzelachse mit dem zweiten Doppelschlitten verbunden ist und lose durch einen Durchgang im ersten Doppelschlitten läuft.

Diese Maßnahmen haben den Vorteil, daß handelsübliche Komponenten verwendet werden können, um die erfindungsgemäße Handhabungsvorrichtung aufzubauen. Es sind dann nur noch äußerst geringfügige Modifikationen erforderlich, um in der beschriebenen Weise das Betätigungsband jeweils durch einen Abschnitt des Doppelschlittens lose zu führen.

Bei einer weiteren bevorzugten Ausgestaltung der Erfindung ist auf jedem Doppelschlitten jeweils eine weitere Einzelachse einer zweiten Linearachse befestigt.

Diese Maßnahme hat den Vorteil, daß in einfacher Weise eine Zweiachsen-Vorrichtung, beispielsweise ein Zweiachsen-Roboter aufgebaut werden kann.

Dies gilt in besonderem Maße dann, wenn die erste Linearachse und die zweite Linearachse einen Winkel von 90° einschließen, wie dies an sich bekannt ist.

Dies gilt ferner insbesondere dann, wenn die Zylinder der Einzelachsen der ersten Linearachse raumfest angeordnet sind.

Dies hat nämlich den Vorteil, daß eine Portalanordnung geschaffen werden kann, bei der die erste Linearachse eine Bewegung quer über ein Werkstück-Förderband ermöglicht, während die zweite Linearachse eine Bewegung in Richtung des Förderbandes gestattet.

Wie bereits angedeutet wurde, eignet sich die Erfindung in besonderer Weise dazu, um einen Montageautomaten zum Bestücken von Leiterplatten aufzubauen. Es können dabei erfindungsgemäß mehrere Varianten von Montagevorgängen ausgeführt werden. Wenn z.B. ein Montageroboter verwendet wird, dessen zweite Linearachse aus zwei Einzelachsen besteht, so können die Zylinderköpfe mit Montagegreifern bestückt werden. Wenn nur jeweils ein Zylinderkopf jeder Einzelachse mit einem Montagegreifer bestückt wird, so kann der Bestückungsvorgang entweder parallel an zwei nebeneinander angeordneten Leiterplatten vorgenommen werden oder sequentiell nacheinander mit den beiden Montagegreifern.

Wenn demgegenüber die beiden Einzelachsen der zweiten Linearachse an ihren beiden Zylinderköpfen mit Montagegreifern versehen sind, so kann entweder simultan an bis zu vier Leiterplatten bestückt werden oder es kann mit den beiden Montagegreifern am einen Ende der Einzelachsen zunächst an zwei Leiterplatten bestückt werden, um diese dann zu den gegenüberliegenden Zylinderköpfen zu verfahren, wo dann weitere Bestückungsvorgänge stattfinden. Wird hierzu eine Fördereinrichtung für die Leiterplatten verwendet, die eine individuelle Förderung jeder einzelnen Leiterplatte gestattet, so kann ohne zeitliche Unterbrechung bestückt werden, indem die von den Montagegreifern am einen Ende der Einzelachsen bestückten Leiterplatten zunächst auf eine Zwischenposition in etwa halber Länge der Einzelachsen gefördert werden, während die am anderen Ende der Einzelachsen befindlichen Montagegreifer bereits an zuvor dorthin geförderten Leiterplatten weiter bestücken.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematisierte perspektivische Ansicht eines Ausführungsbeispiels einer erfindungsgemäßen Handhabungsvorrichtung;
- Fig. 2: eine Draufsicht auf die Anordnung gemäß Fig. 1;
- Fig. 3: eine Darstellung eines praktischen Einsatzfalls für eine Handhabungsvorrichtung gemäß den Fig. 1 und 2 zum Bestücken von Leiterplatten.

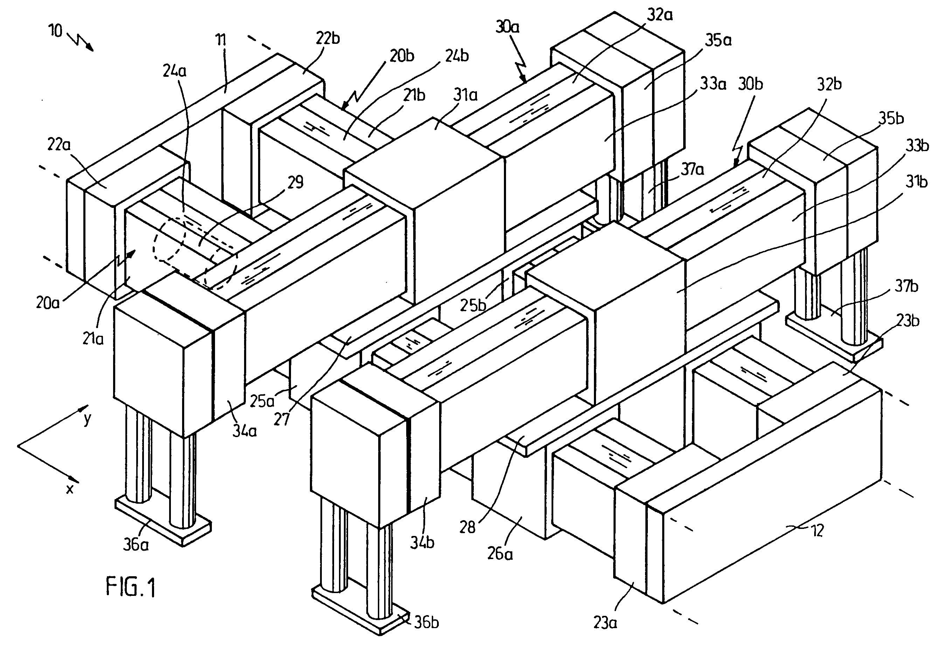

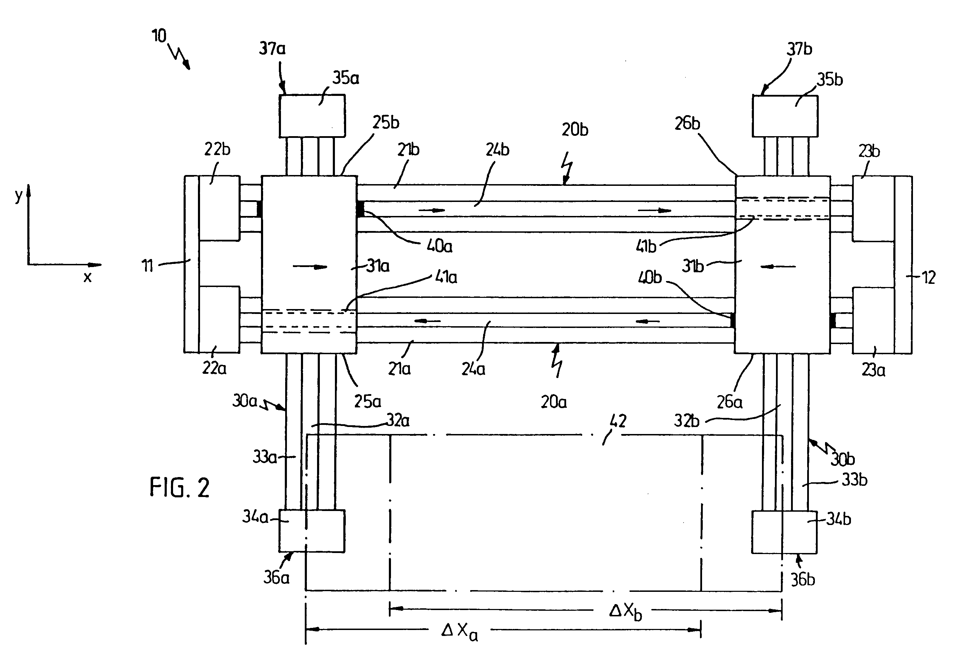

In den Fig. 1 und 2 bezeichnet 10 insgesamt ein Ausführungsbeispiel einer erfindungsgemäßen Handhabungsvorrichtung, wie es als Zweiachsen-Montageroboter verwendet wird.

Bei diesem Ausführungsbeispiel ist die Handhabungsvorrichtung 10 zu zwei Montageplatten 11 und 12 orientiert, die im Abstand voneinander angeordnet sind und raumfest montiert sein können, wie mit gestrichelten Linien angedeutet. Die Montageplatten 11 und 12 können dabei z.B. die Endpunkte eines Portals sein, das oberhalb eines Förderbandes für Werkstücke angeordnet ist.

Zwischen den Montageplatten 11, 12 erstreckt sich eine erste Linearachse, die nach dem in Fig. 1 und 2 eingezeichneten Koordinatensystem als X-Achse bezeichnet werden soll. Die X-Achse besteht aus zwei Einzelachsen 20a, 20b. Die Einzelachsen 20a, 20b weisen Zylinder 21a, 21b auf, an deren freien Enden sich linke Zylinderköpfe (in der Ansicht der Fig. 1 und 2) 22a, 22b und rechte Zylinderköpfe 23a, 23b befinden.

Bei den Einzelachsen 20a, 20b handelt es sich um kolbenstangenlose Kolben-Zylinder-Einheiten. Demzufolge sind die Einzelachsen 20a, 20b jeweils mit einem Band 24a, 24b versehen, das auf der Oberseite der Zylinder 21a, 21b verläuft, in nicht näher dargestellter Weise in den Zylinderköpfen 22a, 22b, 23a, 23b um 180° umgelenkt wird und innerhalb der Zylinder 21a, 21b in gegenläufiger Richtung verläuft. Es versteht sich jedoch, daß ebenso gut Kolben-Zylinder-Einheiten mit Kolbenstange oder Profil-Schlitten-Einheiten mit Zahnriemen- oder Spindelantrieb eingesetzt werden können.

Ein linker Doppelschlitten 25a, 25b ist mit seinem Abschnitt 25a formschlüssig auf dem Zylinder 21a und mit seinem Abschnitt 25b formschlüssig auf dem Zylinder 20b geführt. Ein zweiter Doppelschlitten 26a, 26b ist mit seinem Abschnitt 26a formschlüssig auf dem Zylinder 21a und mit seinem Abschnitt 26b formschlüssig auf dem Zylinder 21b geführt. Die Doppelschlitten 25a, 25b bzw. 26a, 26b werden dadurch gebildet, daß die Abschnitte 25a und 25b mittels einer linken Verbindungsplatte 27 und die Abschnitte 26a, 26b mittels einer rechten Verbindungsplatte 28 in einer Richtung senkrecht zur X-Achse starr miteinander verbunden sind.

Wie in Fig. 1 am Zylinder 21a angedeutet, läuft in diesem ein Kolben 29. Der Kolben 29 ist an seinen beiden Stirnseiten mit den freien Enden des Bandes 24a verbunden. Wie man aus Fig. 2 erkennen kann, ist das Band 24a ferner an der mit 40b bezeichneten Stelle mit dem rechten Doppelschlitten 26a, 26b verbunden, während es in einem Durchgang 41a lediglich lose durch den linken Doppelschlitten 25a, 25b geführt ist.

In entsprechender Weise ist das Band 24b bei 40a fest mit dem Doppelschlitten 25a, 25b verbunden, während es lose durch einen Durchgang 41b am rechten Doppelschlitten 26a, 26b läuft. Im übrigen ist das Band 24b ebenfalls mit einem in den Fig. nicht dargestellten Kolben verbunden, der im Inneren des Zylinders 21b läuft.

Auf diese Weise wird erreicht, daß die beiden Doppelschlitten 25a, 25b bzw. 26a, 26b unabhängig voneinander bewegt werden können, indem der rechte Doppelschlitten 26a, 26b durch Verfahren des Kolbens 29 über das Band 24a verfahren wird und sich gleichzeitig durch die mechanische Führung lose auf dem anderen Zylinder 21b abstützen kann, während es beim linken Doppelschlitten 25a, 25b gerade spiegelbildlich gleich ist.

Auf den Verbindungsplatten 27 bzw. 28 sind darüberhinaus die Elemente einer weiteren Linearachse befestigt, die nach dem für die Fig. 1 und 2 geltenden Koordinatensystem als Y-Achse bezeichnet wird. Die Y-Achse unterteilt sich wiederum in zwei Einzelachsen 30a und 30b, von denen die erste 30a auf der Verbindungsplatte 27 und die zweite 30b auf der Verbindungsplatte 28 befestigt ist. Die Einzelachsen 30a, 30b sind im übrigen vorzugsweise baugleich und aus Stabilitätsgründen leichter gebaut als die Einzelachsen 20a, 20b der X-Achse.

Sie umfassen jeweils einen Schlitten 31a, 31b, der mittels eines Bandes 32a, 32b auf einem Zylinder 33a, 33b geführt ist. Da die Schlitten 31a und 31b fest auf den Verbindungsplatten 27, 28 befestigt sind, bewirkt eine Betätigung der Y-Einzel-Achsen 30a, 30b ein Verfahren des Zylinders 33a, 33b relativ zum Schlitten 31a, 31b. Zur Erhöhung der Biegesteifigkeit sind die Schlitten 31a, 31b in axialer Richtung vorzugsweise länger ausgebildet als die Schlitten 25a/25b, 26a/26b der X-Achse.

Die in den Fig. 1 und 2 linken Zylinderköpfe 34a, 34b sowie die rechten Zylinderköpfe 35a, 35b der Y-Einzel-Achsen 30a, 30b sind mit linken Montagegreifern 36a, 36b bzw. rechten Montagegreifern 37a, 37b versehen. Die nur äußerst schematisch angedeuteten Montagegreifer 36a, 36b, 37a, 37b dienen zum Ergreifen von elektrischen und elektronischen Bauelementen, wie sie auf Leiterplatten angeordnet werden.

In Fig. 2 ist in der unteren Hälfte strichpunktiert der Arbeitsbereich 42 der Handhabungsvorrichtung 10 eingezeichnet. In Y-Richtung kann der Arbeitsbereich 42 dadurch überstrichen werden, daß entweder die gesamte Handhabungsvorrichtung 10 in Y-Richtung relativ zu einer Bezugsebene bewegt oder - bei raumfester Anordnung der Montageplatten 11, 12 eine Fördervorrichtung oder dgl. Werkstücke in Y-Richtung unterhalb der Handhabungsvorrichtung 10 entlangbewegt.

In X-Richtung ist der Arbeitsbereich 42 durch die maximale Verfahrbarkeit der Doppelschlitten 25a, 25b sowie 26a, 26b auf den X-Einzel-Achsen 20a, 20b beschränkt. Dieser X-Verfahrbereich ist mit ΔX_{A} und ΔX_{B} in Fig. 2 eingezeichnet. Man erkennt aus der Darstellung der Fig. 2, daß sich die Einzel-Arbeitsbereiche im wesentlichen überlappen, so daß z.B. die Montagegreifer 36a und 36b entweder jeweils auf ihrer Seite jeweils eine separate Leiterplatte bestücken können oder eine gemeinsame Bestückung einer innerhalb des Überlappungsbereiches des Arbeitsbereiches 42 angeordneten Leiterplatte möglich ist.

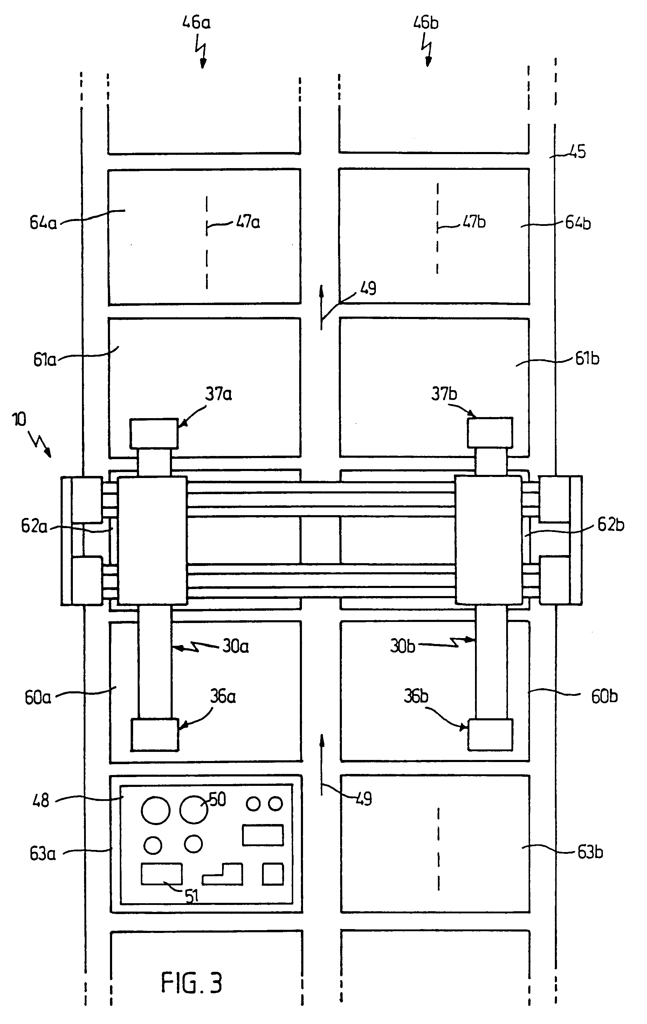

Fig. 3 zeigt eine Leiterplatten-Bestückungsvorrichtung mit einem Zweiachsen-Montageautomat, wie er durch die Handhabungsvorrichtung 10 gemäß Fig. 1 und 2 dargestellt wird.

In der bereits erwähnten Weise ist in Fig. 3 eine Förderanlage 45 vorgesehen, die unter der als Portal raumfest montierten Handhabungsvorrichtung 10 entlangläuft. Die Förderanlage 45 ist zweireihig mit zwei Reihen 46a und 46b ausgebildet. Unterhalb jeder Reihe 46a, 46b befindet sich eine Transporteinrichtung 47a, 47b, um Leiterplatten, von denen lediglich eine einzige mit 48 angedeutet ist, in Richtung der Pfeile 49, d.h. in Y-Richtung, befördern zu können. Die Anordnung ist dabei vorzugsweise so getroffen, daß die Transporteinrichtungen 47a, 47b jede einzelne Leiterplatte 48 individuell fördern können, also nicht, so wie bei einem Förderband, nur eine gemeinsame Förderung sämtlicher Leiterplatten in eine Richtung 49 möglich ist.

Für die nachstehende Erläuterung seien noch mit 60a, 60b untere Montagepositionen, in Förderrichtung 49 stromaufwärts der Handhabungsvorrichtung 10, mit 61a, 61b entsprechende symmetrisch angeordnete obere Montagepositionen stromabwärts der Handhabungsvorrichtung 10, mit 62a, 62b Zwischenpositionen unterhalb der Handhabungsvorrichtung 10 und mit 63a, 63b bzw. 64a, 64b nochmals Positionen stromaufwärts der unteren Montagepositionen bzw. stromabwärts unterhalb der oberen Montagepositionen 61a, 61b bezeichnet.

Danach sind folgende Montageverfahren möglich:
Bei einem ersten Verfahren sei nur jeweils ein Zylinderkopf jeder Einzel-Y-Achse 30a, 30b mit einem Montagegreifer bestückt, also beispielsweise mit den Montagegreifern 36a und 36b in Fig. 3. Die Montage der Leiterplatten 48 kann nun so ablaufen, daß diese, sobald sie in den Reihen 46a, 46b auf die unteren Montagepositionen 60a, 60b gefördert wurden, dort mittels der Montagegreifer 36a bzw. 36b bestückt werden. Nach Abschluß des Bestückungsvorganges werden die Transporteinrichtungen 47a, 47b derart betätigt, daß alle Leiterplatten 48 um jeweils ein Positionsraster in Förderrichtung 49 weiter gefördert werden.

Bei einem zweiten Verfahren sind sämtliche Zylinderköpfe der Y-Einzel-Achsen 30a, 30b mit den Montagegreifern 36a, 36b, 37a und 37b versehen. Es können nun insgesamt vier Leiterplatten simultan bestückt werden, nämlich diejenigen Leiterplatten, die sich gerade auf den Montagepositionen 60a, 60b, 61a und 61b befinden. Hierzu üben alle vier Montagegreifer 36a, 36b, 37a und 37b jeweils den gleichen Montagevorgang aus. Nach Abschluß der Bestückung müssen die Transporteinrichtungen 47a, 47b die Leiterplatten um jeweils zwei Rasterschritte des Positionsrasters weiterschalten, damit unterhalb der Montagegreifer 36a, 36b, 37a und 37b jeweils unbestückte Leiterplatten gelangen.

Bei beiden vorstehend genannten Verfahren wird, sofern die Y-Achsen synchron arbeiten, zumeist nur jeweils eine Bauelementenart montiert, da die Montagegreifer 36a, 36b, 37a und 37b üblicherweise nur, wie bereits erwähnt, für eine Art von Bauelementen geeignet ist. Allerdings ist auch eine asynchrone Betätigung der Y-Achsen möglich, so daß von jeder Y-Einzelachse ein anderes Bauelement bestückt werden kann. Die Y-Einzelachsen können dabei im Überlappungsbereich "über Kreuz" arbeiten. Außerdem muß beachtet werden, daß bei den beiden vorstehend erläuterten Verfahren keine Montage möglich ist, während die Transporteinrichtungen 47a, 47b in Betrieb sind. Es ist schließlich zu berücksichtigen, daß bei dem zweitgenannten Verfahren äußerst hohe Anforderungen an die Positioniergenauigkeit für die Leiterplatten relativ zu den Y-Einzel-Achsen 30a, 30b einzuhalten sind, weil ansonsten keine Simultanbestückung von vier Leiterplatten mit zwei Einzelachsen möglich ist.

Bei einem dritten Montageverfahren sind zwar ebenfalls vier Montagegreifer 36a, 36b, 37a und 37b vorgesehen, vorzugsweise sind jedoch die stromaufwärts angeordneten Montagegreifer 36a und 36b für eine erste Art von Bauelementen vorgesehen, wie sie in Fig. 3 als runde Bauelemente 50 angedeutet sind. Die stromabwärts angeordneten Montagegreifer 37a und 37b sind hingegen für eine zweite Art von Bauelementen geeignet, wie sie in Fig. 3 mit 51 als rechteckige Bauelemente angedeutet sind.

Der Montageablauf ist nun eingerichtet, daß unbestückte Leiterplatten zunächst in die untere Montageposition 60a, 60b gelangen und dort mittels der Montagegreifer 36a, 36b mit runden Bauelementen 50 bestückt werden. Die stromabwärts angeordneten Montagegreifer 37a, 37b sind unterdessen nicht in Betrieb.

Alsdann werden die Transporteinrichtungen 47a, 47b um ein Positionsraster weitergeschaltet, so daß die mit runden Bauelementen 50 teilweise bestückten Leiterplatten 48 in die Zwischenpositionen 62a, 62b gelangen. Gleichzeitig gelangen unbestückte Leiterplatten 48 in die unteren Montagepositionen 60a, 60b.

Damit ist der Ausgangszustand erreicht.

Während nun nachfolgend die auf den unteren Montagepositionen 60a, 60b befindlichen unbestückten Leiterplatten 48 mittels der Montagegreifer 36a, 36b mit runden Bauelementen 50 bestückt werden, werden die zuvor mit runden Bauelementen 50 bestückten Leiterplatten, die sich zunächst auf den Zwischenpositionen 62a, 62b befanden, mittels der individuell wirksamen Transporteinrichtungen 47a, 47b bereits auf die oberen Montagepositionen 61a, 61b verbracht, auf denen die Montagegreifer 37a, 37b zunächst noch untätig sind.

Sobald jedoch der immer noch ablaufende Bestückungsvorgang in den unteren Montagepositionen 60a, 60b beendet ist, wird ohne Pause auf eine Bestückung der bereits mit runden Bauelementen 50 teilbestückten Leiterplatten 48 umgeschaltet, die sich jetzt auf den oberen Montagepositionen 61a, 61b befinden. Während also nun die stromabwärts angeordneten Montagegreifer 37a, 37b dort tätig werden, sind die stromaufwärts angeordneten Montagegreifer 36a, 36b untätig, es werden jedoch mittels der Transporteinrichtung 47a, 47b die mit runden Bauelementen 50 zuvor auf den unteren Montagepositionen 60a, 60b teilbestückten Leiterplatten 48 auf die Zwischenpositionen 62a, 62b verbracht, während zugleich unbestückte Leiterplatten 48 auf die unteren Montagepositionen 60a, 60b gebracht und dort bereitgehalten werden.

Ist nun der immer noch andauernde Montagevorgang auf den oberen Montagepositionen 61a, 61b mittels der stromabwärts angeordneten Montagegreifer 37a, 37b beendet und die dort befindlichen Leiterplatten 48 nun auch mit rechteckigen Bauelementen 51 bestückt, kann ohne Pause wieder auf die stromaufwärts angeordneten Montagegreifer 36a, 36b umgeschaltet werden, die sogleich damit beginnen, in den unteren Montagepositionen 60a, 60b die dort befindlichen, noch unbestückten Leiterplatten 48 mit runden Bauelementen 50 zu versehen, während, wie bereits geschildert, die zuvor mit runden Bauelementen 50 teilbestückten Leiterplatten 48 von den Zwischenpositionen 62a, 62b zur oberen Montageposition 61a, 61b hin verfahren wurden. Auf diese Weise ist es daher möglich, ohne jegliche, durch den Transport von Leiterplatten verursachte Stillstandszeit zu arbeiten.

Es versteht sich, daß die vorstehend geschilderte Vorgehensweise nach einem der drei genannten Verfahren in Abweichung von der beispielhaften Darstellung der Fig. 3 auch mit jeweils einer einzigen Leiterplatte in den Positionen 60 ... durchgeführt werden kann, ebenso, wie es möglich ist, durch jeden Montagegreifer in jede der Positionen 60 ... nicht nur jeweils eine Leiterplatte sondern deren mehrere nebeneinander und nacheinander bestücken zu lassen. Auch sind Kombinationen der vorstehend erläuterten Verfahren denkbar.

## Patentansprüche

1. Handhabungsvorrichtung mit einer ersten, aus zwei parallelen Einzelachsen (20a, 20b) bestehenden Linearachse (X), unter der definitionsgemäß eine fremdkraftbetätigte Vorrichtung zu verstehen ist, die eine Bewegung entlang einer Geraden durchführt, und diese Linearachse (X) einen Doppelschlitten (25, 27) aufweist, der auf Profilen beider Einzelachsen (20a, 20b) läuft, wobei der Doppelschlitten (25, 27) mit einem Antriebsmittel der einen Einzelachse (20b) gekoppelt ist und auf dem Profil der anderen Einzelachse (20a) unangetrieben läuft,
dadurch gekennzeichnet,
daß zusätzlich ein zweiter Doppelschlitten (26, 28) auf den Profilen läuft, der mit einem Antriebsmittel der anderen Einzelachse (20a) gekoppelt ist und auf dem Profil der einen Einzelachse (20b) unangetrieben läuft, wobei die Antriebe der Doppelschlitten in den Profilen der Einzelachsen (20a, 20b), auf denen sie laufen, untergebracht sind.

2. Handhabungsvorrichtung nach Anspruch 1,
dadurch gekennzeichnet,
daß die Einzelachsen (20a, 20b) von kolbenstangenlosen Kolben-Zylinder-Einheiten gebildet werden, bei denen die Schlitten (25 bis 29) mit den Kolben (29) über Bänder (24, 24b) verbunden sind, wobei das eine Band (24b) der einen Einzelachse (20b) mit dem ersten Doppelschlitten (25, 27) verbunden (40a) ist und lose durch einen Durchgang (41b) im zweiten Doppelschlitten (26, 28) läuft, während das andere Band (24a) der anderen Einzelachse (20a) mit dem zweiten Doppelschlitten (26, 28) verbunden (40b) ist und lose durch einen Durchgang (41a) im ersten Doppelschlitten (25, 27) läuft.

3. Handhabungsvorrichtung nach Anspruch 1 oder 2, dadurch gekennzeichnet, daß auf jedem Doppelschlitten (25 bis 29) jeweils eine weitere Einzelachse (30a, 30b) einer zweiten Linearachse (Y) befestigt ist.

4. Handhabungsvorrichtung nach Anspruch 3, dadurch gekennzeichnet, daß die erste Linearachse (X) und die zweite Linearachse (Y) einen Winkel von 90° einschließen.

5. Handhabungsvorrichtung nach einem oder mehreren der Ansprüche 1 bis 4, dadurch gekennzeichnet, daß die Zylinder (21a, 21b) der Einzelachsen (20a, 20b) der ersten Linearachse (X) raumfest angeordnet sind.

6. Handhabungsvorrichtung nach einem oder mehreren der Ansprüche 1 bis 5, dadurch gekennzeichnet, daß die weiteren Einzelachsen (30a, 30b) der zweiten Linearachse (Y) mit ihren Schlitten (31a, 31b) auf den Doppelschlitten (25 bis 29) der Einzelachsen (20a, 20b) der ersten Linearachse (X) befestigt sind.

7. Handhabungsvorrichtung nach Anspruch 6, dadurch gekennzeichnet, daß an jeweils mindestens einem Zylinderkopf (34a, 34b, 35a, 35b) der weiteren Einzelachsen (30a, 30b) der zweiten Linearachse (Y) Montagegreifer (36a, 36b, 37a, 37b) befestigt sind.

8. Handhabungsvorrichtung nach Anspruch 7, dadurch gekennzeichnet, daß die erste Linearachse (X) als Portalachse oberhalb einer Förderanlage (45) zum Bestücken von Leiterplatten (48) angeordnet ist und daß die zweite Linearachse (Y) in Förderrichtung verläuft.

9. Verfahren zum Handhaben von Werkstücken, gekennzeichnet durch die Verwendung einer Handhabungsvorrichtung nach einem oder mehreren der Ansprüche 1 bis 8.

10. Verfahren nach Anspruch 9, gekennzeichnet durch seine Anwendung beim Bestücken von Leiterplatten.

## Claims

1. A manipulating device comprising a first linear axis (X), which is to be understood to define a device actuated by extraneous force, which axis consists of two parallel individual axes (20a, 20b) and effects a movement along a straight line, and this linear axis (X) has a double slide (25, 27) which runs on profiles of both individual axes (20a, 20b), the double slide (25, 27) being coupled to a drive means of one individual axis (20b) and runs in non-driven manner on the profile of the other individual axis (20a),
characterised in that
additionally a second double slide (26, 28) runs on the profiles, which is coupled to a drive means of the other individual axis (20a) and runs in non-driven manner on the profile of one individual axis (20b), the drives of the double slides being housed in the profiles of the individual axes (20a, 20b) on which they run.

2. A manipulating device according to Claim 1, characterised in that the individual axes (20a, 20b) are formed by piston-rod-less piston-cylinder units, in which the slides (25 to 29) are connected to the pistons (29) by belts (24, 24b), one belt (24b) of one individual axis (20b) being connected (40a) to the first double slide (25, 27) and running loosely through a passage (41b) in the second double slide (26, 28), whereas the other belt (24a) of the other individual axis (20a) is connected (40b) to the second double slide (26, 28) and runs loosely through a passage (41a) in the first double slide (25, 27).

3. A manipulating device according to Claim 1 or 2, characterised in that one additional individual axis (30a, 30b) of a second linear axis (Y) is attached to each double slide (25 to 29).

4. A manipulating device according to Claim 3, characterised in that the first linear axis (X) and the second linear axis (Y) enclose an angle of 90°.

5. A manipulating device according to one or more of Claims 1 to 4, characterised in that the cylinders (21a, 21b) of the individual axes (20a, 20b) of the first linear axis (X) are arranged in space-fixed manner.

6. A manipulating device according to one or more of Claims 1 to 5, characterised in that the additional individual axes (30a, 30b) of the second linear axis (Y) are attached with their slides (31a, 31b) to the double slides (25 to 29) of the individual axes (20a, 20b) of the first linear axis (X).

7. A manipulating device according to Claim 6, characterised in that assembly grippers (36a, 36b, 37a, 37b) are attached to at least one cylinder head (34a, 34b, 35a, 35b) in each case of the additional individual axes (30a, 30b) of the second linear axis (Y).

8. A manipulating device according to Claim 7, characterised in that the first linear axis (X) is arranged as a portal axis above a conveying installation (45) for equipping printed circuit boards (48) and that the second linear axis (Y) extends in the direction of conveyance.

9. A method for manipulating workpieces, characterised by the use of a manipulating device according to one or more of Claims 1 to 8.

10. A method according to Claim 9, characterised by the application thereof to the insertion of components in printed circuit boards.

## Revendications

1. Dispositif de manipulation, comportant un premier axe linéaire (X) constitué de deux axes individuels parallèles (20a,20b), sous la définition duquel il doit être compris un dispositif actionné par une force extérieure, qui effectue un déplacement le long d'une ligne droite, et cet axe linéaire (X) présente un chariot double (25,27) qui se déplace sur des profilés des deux axes individuels (20a,20b), le chariot double (25,27) étant couplé à un moyen d'entraînement d'un axe individuel (20b) et se déplaçant, de façon non entraînée, sur le profilé de l'autre axe individuel (20a),
caractérisé en ce que, de plus, un second chariot double (26,28) se déplace sur les profilés, chariot qui est couplé à un moyen d'entraînement de l'autre axe individuel (20a) et se déplace, de façon non entraînée, sur le profilé de l'axe individuel (20b), les entraînements des chariots doubles étant disposés dans les profilés des axes individuels (20a,20b), sur lesquels ils se déplacent.

2. Dispositif de manipulation selon la revendication 1,
caractérisé en ce que les axes individuels (20a,20b) sont formés par des vérins sans tige de piston, les chariots (25 à 28) étant reliés aux pistons (29) par l'intermédiaire de bandes (24,24b), une bande (24b) d'un axe individuel (20b) étant reliée (40a) au premier chariot double (25,27) et se déplaçant de façon lâche à travers un passage (41b) dans le second chariot double (26,28), tandis que l'autre bande (24a) de l'autre axe individuel (20a) est reliée (40b) au second chariot double (26,28) et se déplace de façon lâche à travers un passage (41a) dans le premier chariot double (25,27).

3. Dispositif de manipulation selon la revendication 1 ou 2,
caractérisé en ce que, à chaque fois, un autre axe individuel (30a,30b) d'un second axe linéaire (Y) est fixé sur chaque chariot double (25 à 28).

4. Dispositif de manipulation selon la revendication 3,
caractérisé en ce que le premier axe linéaire (X) et le second axe linéaire (Y) forment un angle de 90°.

5. Dispositif de manipulation selon une ou plusieurs des revendications 1 à 4,
caractérisé en ce que les cylindres (21a,21b) des axes individuels (20a,20b) du premier axe linéaire (X) sont agencés de façon stabilisée.

6. Dispositif de manipulation selon une ou plusieurs des revendications 1 à 5,
caractérisé en ce que les autres axes individuels (30a,30b) du second axe linéaire (Y) avec leurs chariots (31a,31b) sont fixés sur les chariots doubles (25 à 28) des axes individuels (20a,20b) du premier axe linéaire (X).

7. Dispositif de manipulation selon la revendication 6,
caractérisé en ce que des pinces de montage (36a,36b, 37a,37b) sont fixées, à chaque fois, à au moins une tête de cylindre (34a,34b,35a,35b) des autres axes individuels (30a,30b) du second axe linéaire (Y).

8. Dispositif de manipulation selon la revendication 7,
caractérisé en ce que le premier axe linéaire (X) est agencé comme axe de portique au-dessus d'une installation de transport (45) pour équiper des plaquettes imprimées (48), et en ce que le second axe linéaire (Y) s'étend dans la direction de transport.

9. Procédé pour manipuler des pièces,
caractérisé par l'utilisation d'un dispositif de manipulation selon une ou plusieurs des revendications 1 à 8.

10. Procédé selon la revendication 9,
caractérisé par son utilisation pour équiper des plaquettes imprimées.
